# EUROPEAN PATENT APPLICATION

(11) **EP 3 792 705 A1**
(43) Date of publication of application: **17.03.2021**
(21) Application number: 19196619.1
(22) Date of filing: 11.09.2019
(51) Int. Cl.: G05B 13/02

(54) **METHODS FOR CONFIGURING AND OPERATING A THERMAL ENERGY STORAGE SYSTEM AND THERMAL ENERGY STORAGE SYSTEM**

(71) Applicant: Siemens Gamesa Renewable Energy GmbH & Co. KG, 20097 Hamburg (DE)
(72) Inventor: Eggers, Jan Rudolf, 21640 Bliedersdorf (DE); Pagelsen, Niels, 22303 Hamburg (DE); Westermann, Tom, 20146 Hamburg (DE); Yashchenko, Sergey, 22607 Hamburg (DE); Zaczek, Alexander, 22765 Hamburg (DE)
(74) Representative: Aspacher, Karl-Georg

(57) **Abstract**

The invention is related to a method for configuring a thermal energy storage system (1), comprising the following steps:
- providing a thermal energy storage device (2) for storing heat,
- providing a plurality of sensors (3) at different locations of the thermal energy storage device (2) for measuring physical parameters at the different locations,
- providing a control device (4) of the thermal energy storage system (1) for controlling the plurality of sensors (3),
- generating a numerical model for at least one first sensor (3) of the plurality of sensors (3) based on the measured physical parameters of the plurality of sensors (3) by means of machine learning, and
- storing the numerical model by the control device (4) for configuring the thermal energy storage system (1).

Furthermore, the invention is related to a thermal energy storage system (1) and a method for operating a thermal energy storage system (1).

## Description

The invention is related to a method for configuring a thermal energy storage system, especially an electro thermal energy storage system. The invention is further related to a thermal energy storage system, especially an electro thermal energy storage system, and to a method for operating a thermal energy storage system, especially an electro thermal energy storage system.

Thermal energy storage systems are used for storing heat in a thermal energy storage device of the thermal energy storage system. Electro thermal energy storage systems are generally used for converting electrical power into heat and for storing the generated heat in a thermal energy storage device of the electro thermal energy storage system. The heat is usually stored for later use, especially in a steam generator of a power plant or the like. A heat transfer fluid, e.g. air, is used for the transportation of energy within the thermal energy storage system.

In order to operate the thermal energy storage system, especially the electro thermal energy storage system, efficiently, a mass flow of the heat transfer fluid as well as its temperature have to be controlled. The thermophysical parameters of the heat transfer fluid corresponds to an operation mode of the thermal energy storage system and, therefore, vary over time.

In general, thermal energy storage systems comprise a plurality of sensors, such as temperature sensors, pressure sensors or the like, to collect information about physical parameters, such as temperature, pressure or other properties of the thermal energy storage system. The state of charge (SOC) is one example of necessary control parameters for operating the thermal energy storage system that can be obtained from the measured physical parameters. The SOC corresponds with the amount of heat stored within the thermal energy storage system.

In the past, for obtaining a reliable information about a status of a thermal energy storage device, a plurality of sensors is arranged at the thermal energy storage device for measuring physical parameters, such as temperature, pressure or the like. The more sensors used, the higher are production costs of the thermal energy storage system. Moreover, in many cases, lifetime of a sensor is less than lifetime of the thermal energy storage device. This means that during lifetime of the thermal energy storage systems, sensors are very likely to fail.

Consequently, the broken sensors must be replaced. This requires dismounting the thermal energy storage system, dismounting the broken sensors, mounting the new sensors and mounting the thermal energy storage system. This procedure is expensive and time consuming. In case the broken sensors are not replaced, the thermal energy storage system can only be used partially based on the measured physical values by the remaining working sensors. This leads to a decrease of accuracy of analyzing the status of the thermal energy storage device, e.g. the SOC, and, therefore, to a limited performance of the thermal energy storage system.

Therefore, it is an object of the present invention to provide a solution that does not show the limitations of the state in the art or at least is an improvement over the state in the art. It is especially an object of the present invention to provide a method for configuring a thermal energy storage system, especially an electro thermal energy storage system, a thermal energy storage system, especially an electro thermal energy storage system, and a method for operating a thermal energy storage system, especially an electro thermal energy storage system, that promote less production costs and/or less maintenance costs and/or improved reliability of the thermal energy storage system.

The aforementioned object is solved by the patent claims. Thus, the object is solved by a method for configuring a thermal energy storage system according to the features of independent claim 1, by a thermal energy storage system according to the features of independent claim 7 and by a method for operating a thermal energy storage system according to the features of independent claim 10. Further details of the invention unfold from the dependent claims as well as the description and the drawings. Thereby, features that have been described with respect to the inventive methods can also apply to the inventive system and vice versa.

According to a first aspect of the invention, the problem is solved by a method for configuring a thermal energy storage system. The method comprising the following steps:
- providing a thermal energy storage device for storing heat,
- providing a plurality of sensors at different locations of the thermal energy storage device for measuring physical parameters at the different locations,
- providing a control device of the thermal energy storage system for controlling the plurality of sensors,
- generating a numerical model for at least one first sensor of the plurality of sensors based on measured and/or simulated physical parameters of the plurality of sensors by means of machine learning, and
- storing the numerical model by the control device for configuring the thermal energy storage system.

For executing the method, a thermal energy storage system, especially an electro thermal energy storage system, with a thermal energy storage device for storing heat is needed. It is preferred that an electro thermal energy storage system is provided that is capable of transforming electrical energy into heat. Preferably, a thermal energy storage system is provided that operates with air as heat transfer fluid.

Moreover, the plurality of sensors is provided at the thermal energy storage device. The sensors are configured to measure at least one physical parameter of the thermal energy storage device, such as temperature and/or pressure at a specific location within the thermal energy storage device. For this purpose, the sensors are provided at different locations within the thermal energy storage device. Preferably, the sensors are evenly distributed over the volume of the thermal energy storage device. The sensors can comprise force, pressure, temperature, flow, displacement and humidity sensors.

Beyond that, the control device of the thermal energy storage system for controlling the plurality of sensors is provided. In this regard, controlling the sensors can be understood as reading measurement data of the sensors. Preferably, the control device is configured for evaluating the measurement data provided by the sensors, in order to evaluate the status of the thermal energy storage system, especially the state of charge (SOC) or the like. A control device is provided that comprises a data storage device for storing the numerical model. Preferably, the control device is configured for operating the thermal energy storage system, especially by using the numerical model.

Furthermore, the numerical model for the at least one first sensor of the plurality of sensors is generated. The numerical model is generated based on the measured physical parameters of the plurality of sensors by means of machine learning. In this regard, the measurement data of the whole plurality of sensors or at least of a group of the plurality of sensors is used. With the numerical model, a measurement value of the at least one first sensor can be simulated on the basis of evaluation of measurement values of the remaining sensors of the plurality of sensors or at least of a group of the remaining sensors. With other words, with the numerical model, the at least one first sensor is replaceable by at least one virtual first sensor. Preferably, the numerical model is configured for providing substitutional virtual sensors for a group of sensors of the plurality of sensors or, more preferred, for the whole plurality of sensors. Alternatively or in addition, the numerical model can be generated based on computational fluid dynamics (CFD), finite element method (FEM) and/or discrete element method (DEM) data. Thus, simulated sensor data can be used for generating the numerical model.

Lastly, the numerical model is stored by the control device, especially in the data storage device of the control device or the like, for configuring the thermal energy storage system. By these means, the thermal energy storage system is configured for operation.

For machine learning, preferably a supervised machine learning method based on neural networks is used. The neural networks preferably consist of several - preferably between 2 and 10 - fully connected hidden layers. The number of nodes in the hidden layers is preferably between 10 and 50 in each layer. The neural networks are trained by utilizing at least a portion of either measured physical sensor data, e.g. temperature, pressure, force, flow, displacement and/or humidity, or simulated data from CFD, FEM or DEM, or a combination of physical sensor and simulated data to predict results for other locations. Preferably, the models are implemented utilizing the open source machine learning platform Tensorflow with a Keras interface. Preferably, the neural networks are tested for accuracy on an independent data set.

The method for configuring a thermal energy storage system has the advantage over prior art solutions that by simple and cost effective means, the thermal energy storage system can be configured. Thus, the amount of necessary sensors for the production of the thermal energy storage system can be reduced due to the provision of virtual sensors by the numerical model. By these means, costs for production of the thermal energy storage system can be reduced. Moreover, in case of a broken sensor, the broken sensor can be easily replaced by a corresponding virtual sensor by means of the numerical model. This further helps to increase reliability of the thermal energy storage system and to reduce maintenance costs, since broken sensors do not necessarily have to be replaced anymore.

According to a preferred embodiment of the invention, by providing the plurality of sensors, a plurality of temperature sensors is provided. With temperature sensors, a state of charge of the thermal energy storage device can be reliably determined. Additionally, it is preferred that pressure sensors are provided as well, in order to determine fluid mechanical properties of the heat transfer fluid, such as current speed or the like. Preferably, the temperature sensors and/or the pressure sensors are evenly distributed over the volume of the thermal energy storage device. This has the advantage that a status of the electro thermal energy storage system can be determined reliably and in a cost efficient way.

Preferably, the plurality of sensors comprises a plurality of temperature sensors. With temperature sensors, a state of charge of the thermal energy storage device can be determined reliably. Additionally, it is preferred that pressure sensors are provided as well, in order to determine fluid mechanical properties of the heat transfer fluid, such as current speed or the like. Preferably, the temperature sensors and/or the pressure sensors are evenly distributed over the volume of the thermal energy storage device. This has the advantage that a status of the thermal energy storage system can be determined reliably and in a cost efficient way.

It is preferred that the numerical model is generated based on a temperature distribution of a heat transfer fluid of the thermal energy storage device. As heat transfer fluid, preferably air is used. The temperature distribution of the heat transfer fluid is determined by the plurality of temperature sensors. This has the advantage that at low cost and with reduced required complexity, the numerical model is configured for determining the temperature of the heat transfer fluid at a specific volume point, preferably at a group of volume points and more preferred at all volume points, of the thermal energy storage device.

Advantageously, the numerical model is generated based on a pressure and/or mass flow distribution of a heat transfer fluid of the thermal energy storage device. The pressure and/or mass flow distribution of the heat transfer fluid is preferably determined by the plurality of pressure sensors. This has the advantage that at low cost and with reduced required complexity, the numerical model is configured for determining the pressure and/or mass flow of the heat transfer fluid at a specific volume point, preferably at a group of volume points and more preferred at all volume points, of the thermal energy storage device.

It is preferred that the numerical model is generated for multiple sensors of the plurality of sensors. By these means, the numerical model is configured for providing multiple virtual sensors, preferably at the majority of sensors. Further preferred, the numerical model is generated for the whole plurality of sensors. This has the advantage, that the amount of sensors for enabling an efficient operation of the thermal energy storage system can be reduced significantly. Thus, an thermal energy storage system can be equipped with less sensors, wherein the cancelled sensors can be replaced by virtual sensors by means of the numerical model. Moreover, failure of a sensor of the thermal energy storage system can be compensated easily by virtually replacing the broken sensor with a virtual sensor by means of the numerical model. This can save production and maintenance costs of the thermal energy storage system. Beyond that, shutdown times of the thermal energy storage system due to replacement of broken sensors can be avoided.

Preferably, for generating the numerical model, a computational fluid dynamic model and/or a finite element method model and/or a discrete element method model of the thermal energy storage device for representing temperatures of a plurality of volume elements of the thermal energy storage device is used, wherein the numerical model is based on properties of the thermal energy storage device. With a numerical model, based on a computational fluid dynamic model, a finite element method model or a discrete element method model of the thermal energy storage device and actual sensor data of at least a part of the plurality of sensors, temperatures and temperature developments of volume elements, preferably of each volume element, of the thermal energy storage device can be determined reliably. The finite element method model and discrete element method model are preferably used in combination with pressure sensors or force sensors. This especially concerns volume elements that are not controlled by a non-virtual sensor. The generation of a computational fluid dynamic model, a finite element method model or a discrete element method model has the advantage, that a reliable and robust analysis of the operational status of the thermal energy storage system can be generated in real time and in a cost-efficient way.

According to a second aspect of the invention, the problem is solved by a thermal energy storage system, especially an electro thermal energy storage system, comprising a thermal energy storage device for storing heat, a plurality of sensors, distributed at different locations of the thermal energy storage device for measuring physical parameters at the different locations, and a control device for controlling the plurality of sensors. According to the invention, a numerical model for at least one first sensor of the plurality of sensors based on measured physical parameters of the plurality of sensors by means of machine learning is stored in the control device, wherein the control device is configured for predicting a physical parameter at the at least one first sensor by means of physical parameters of at least a group of the plurality of sensors and the numerical model.

In other words, the numerical model is stored in the control device. The control device can be located at the thermal energy storage device or at a remote location. The control device is configured for reading measurement data of the plurality of sensors. Moreover, the control device is configured for using the measurement data of the plurality of sensors or at least of a group of the plurality of sensors in combination with the numerical model to determine physical parameter data of at least one location within the volume of the thermal energy storage device. Thus, at least one virtual sensor is provided. Preferably, the control device is configured to provide such virtual sensor at a location of a real sensor of the plurality of sensors. Alternatively or additionally, the control device is configured to provide such virtual sensor at a location of the thermal energy storage device where no sensor is present.

The thermal energy storage system has the same advantages over prior art solutions as already discussed with respect to the method for configuring an thermal energy storage system according to the first aspect of the invention. Therefore, the thermal energy storage system according to the invention has the advantage over known thermal energy storage systems that the amount of necessary sensors for the production of the thermal energy storage system can be reduced due to the provision of virtual sensors by the numerical model. By these means, costs for production of the thermal energy storage system can be reduced as well. Moreover, in case of a broken sensor, the broken sensor can be easily replaced by a corresponding virtual sensor by means of the numerical model. This further helps to increase reliability of the thermal energy storage system and to reduce maintenance costs, since broken sensors do not necessarily have to be replaced anymore.

It is further preferred that the thermal energy storage system is configured by the method according to the first aspect of the invention. This has the advantage that the thermal energy storage system is configured by simple and cost effective means.

Preferably, the plurality of sensors is configured as temperature sensors. With temperature sensors, a state of charge of the thermal energy storage device can be reliably determined. Additionally, it is preferred that the thermal energy storage system comprises a plurality of sensors that are configured as pressure sensors, in order to determine fluid mechanical properties of the heat transfer fluid, such as current speed or the like. Preferably, the temperature sensors and/or the pressure sensors are evenly distributed over the volume of the thermal energy storage device. This has the advantage that a status of the thermal energy storage system can be determined reliably and in a cost efficient way.

According to a third aspect of the invention, the problem is solved by a method for operating a thermal energy storage system, especially an electro thermal energy storage system, according to the second aspect of the invention. The method comprising the following steps:
- measuring or simulating physical parameters at the different locations by a plurality of sensors,
- processing the measured physical parameters with a numerical model by the control device of the thermal energy storage system, and
- determining a physical parameter of a location of a first virtual sensor of the thermal energy storage system, based on the numerical model and the measured physical parameters.

The physical parameters are measured by the plurality of sensors. This means that the physical parameters can be measured by at least one sensor or at least a group of sensors of the plurality of sensors. The sensors for providing the physical parameters are selected such that there is enough sensor information for reliably using the numerical model for generating virtual physical data for virtual sensors.

The measured physical parameters are processed by the control device with the numerical model. By these means, virtual sensor data of at least one virtual sensor of the thermal energy storage system is determined. The virtual sensor can be at a location of the thermal energy storage device where a broken sensor is located. Alternatively, the virtual sensor can be at a location of the thermal energy storage device where no sensor is located. In a further alternative, the virtual sensor can be at a location of the thermal energy storage device where a normal working sensor is located in order to test the accuracy of that sensor or in order to improve the quality of the numerical model by means of machine learning.

The method for operating an inventive thermal energy storage system has the same advantages over prior art solutions as already discussed with respect to the method for configuring a thermal energy storage system according to the first aspect of the invention and the thermal energy storage system according to the second aspect of the invention. Therefore, the inventive method has the advantage over known methods that the amount of necessary sensors for the production of the thermal energy storage system can be reduced due to the provision of virtual sensors by the numerical model. By these means, costs for production of the thermal energy storage system can be reduced as well. Moreover, in case of a broken sensor, the broken sensor can be easily replaced by a corresponding virtual sensor by means of the numerical model. This further helps to increase reliability of the thermal energy storage system and to reduce maintenance costs, since broken sensors do not necessarily have to be replaced anymore.

Further advantages, features and details of the invention unfold from the following description, in which by reference to drawings working examples of the present invention are described in detail. Thereby, the features from the claims as well as the features mentioned in the description can be essential for the invention as taken alone or in an arbitrary combination. In the drawings:
- Figure 1: shows a schematic side view of a preferred embodiment of a thermal energy storage system according to the second aspect of the invention,
- Figure 2: shows a schematic view of a sensor configuration according to the invention,
- Figure 3: shows a diagram illustrating the accuracy of virtual sensors in comparison with regular sensors,
- Figure 4: shows a flow chart of the inventive method according to the first aspect of the invention, and
- Figure 5: shows a flow chart of the inventive method according to the third aspect of the invention.

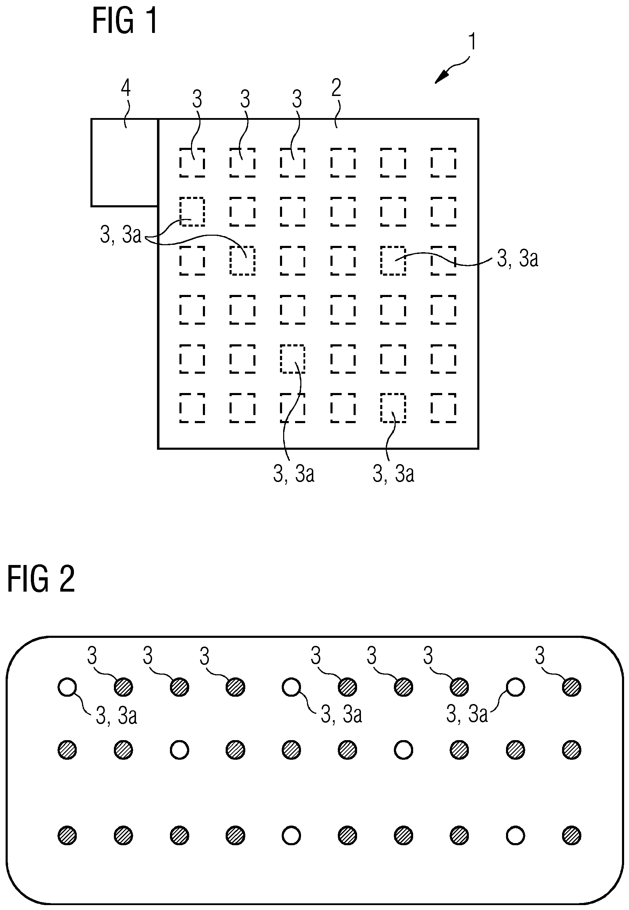

Elements with the same function and effectiveness are denoted each in figures 1 to 5 with the same reference numbers.

In Fig. 1, a preferred embodiment of a thermal energy storage system 1 according to the second aspect of the invention is shown in a schematic side view. Preferably, the thermal energy storage system 1 is configured as an electro thermal energy storage system 1. The thermal energy storage system 1 comprises a thermal energy storage device 2 for storing heat. Within the thermal energy storage device 2, a plurality of sensors 3 is shown. Most of the sensors 3 are normal sensors 3, especially thermal and/or pressure sensors 3, for measuring physical parameters, such as temperature and/or pressure. A few sensors 3 are configured as virtual sensors 3a by means of the numerical model. The numerical model is stored in a control device 4 of the thermal energy storage system 1 for controlling the plurality of sensors 3.

In Fig. 2, a sensor 3 configuration according to the invention is shown in a schematic view. The sensors 3 shown as filled circles are used as input data for generating the numerical model by machine learning. The sensors 3 shown as open circles are virtual sensors 3a, generated by the numerical model.

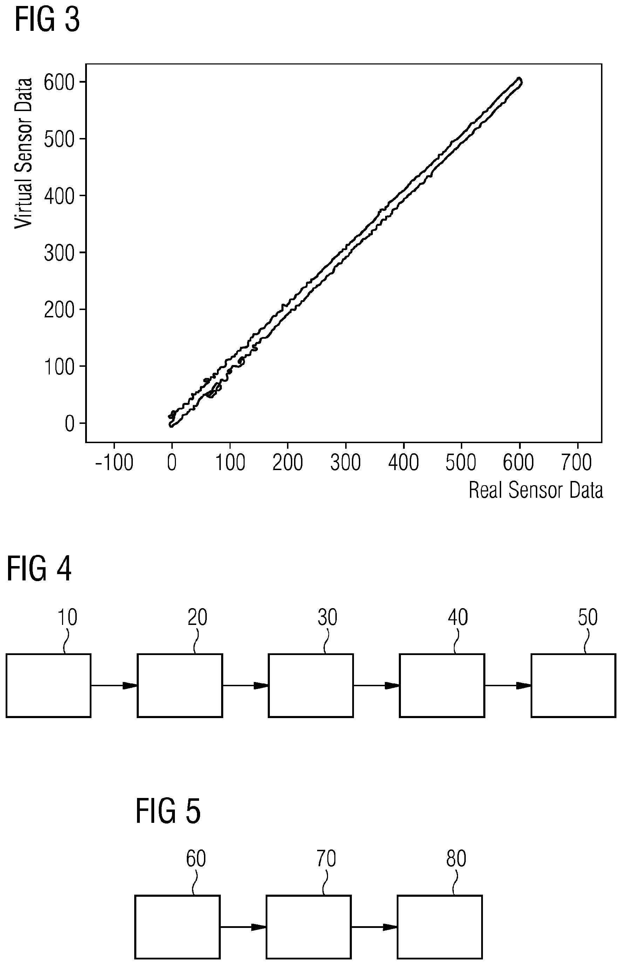

In Fig. 3, a diagram illustrating the accuracy of virtual sensors 3a in comparison with regular sensors 3 is shown. As can be inferred from this diagram, the real sensor 3 data and the virtual sensor 3a data show a clear correlation. This means that, by means of the numerical model, virtual sensors 3a with high accuracy can be provided.

In Fig. 4, a flow chart of the inventive method according to the first aspect of the invention is shown. In a first step 10, a thermal energy storage device 2 for storing heat is provided. In a second step 20, a plurality of sensors 3 is provided at different locations of the thermal energy storage device 2 for measuring physical parameters at the different locations. In a third step 30, a control device 4 of the thermal energy storage system 1 for controlling the plurality of sensors 3 is provided. In a fourth step 40, a numerical model for at least one first sensor 3 of the plurality of sensors 3 is generated based on the measured physical parameters of the plurality of sensors 3 by means of machine learning. In a fifth step 50, the numerical model is stored in the control device 4 for configuring the thermal energy storage system 1. Now, the thermal energy storage system 1 is configured to compensate a broken sensor 3 with a virtual sensor 3a by means of the numerical model.

In Fig. 5, a flow chart of the inventive method according to the third aspect of the invention is shown. Since the inventive method according to the third aspect of the invention is based on the inventive method according to the first aspect of the invention, the numbering of the method steps is continued. In a sixth step 60, physical parameters are measured at the different locations by a plurality of sensors 3 of the thermal energy storage system 1. In a seventh step 70, the measured physical parameters are processed with the numerical model by the control device 4 of the thermal energy storage system 1. In an eighth step 80, a physical parameter of a location of a first virtual sensor 3a of the thermal energy storage system 1 is determined by the control device 4, based on the numerical model and the measured physical parameters. In other words, by these means, physical values at different locations within the thermal energy storage device 2 can be determined without the need of generating real measurement data at these locations.

## Claims

1. Method for configuring a thermal energy storage system (1), comprising the following steps:
- providing a thermal energy storage device (2) for storing heat,
- providing a plurality of sensors (3) at different locations of the thermal energy storage device (2) for measuring physical parameters at the different locations,
- providing a control device (4) of the thermal energy storage system (1) for controlling the plurality of sensors (3),
- generating a numerical model for at least one first sensor (3) of the plurality of sensors (3) based on measured and/or simulated physical parameters of the plurality of sensors (3) by means of machine learning, and
- storing the numerical model by the control device (4) for configuring the thermal energy storage system (1).

2. Method according to claim 1,
w her e i n
by providing the plurality of sensors (3), a plurality of temperature sensors (3) is provided.

3. Method according to claim 2,
w her e i n
the numerical model is generated on the basis of a temperature distribution of a heat transfer fluid of the thermal energy storage device (2).

4. Method according to any of the previous claims,
wherein
the numerical model is generated on the basis of a pressure and/or mass flow distribution of a heat transfer fluid of the thermal energy storage device (2).

5. Method according to any of the previous claims,
wherein
the numerical model is generated for multiple sensors (3) of the plurality of sensors (3).

6. Method according to any of the previous claims,
wherein
for generating the numerical model, a computational fluid dynamic model and/or a finite element method model and/or a discrete element method model of the thermal energy storage device (2) for representing temperatures of a plurality of volume elements of the thermal energy storage device (2)is used, wherein the numerical model is based on properties of the thermal energy storage device (2).

7. Thermal energy storage system (1), comprising a thermal energy storage device (2) for storing heat, a plurality of sensors (3), distributed at different locations of the thermal energy storage device for measuring physical parameters at the different locations, and a control device (4) for controlling the plurality of sensors (3),
wherein
a numerical model for at least one first sensor (3) of the plurality of sensors (3) based on measured physical parameters of the plurality of sensors (3) by means of machine learning is stored in the control device (4), wherein the control device (4) is configured for predicting a physical parameter at the at least one first sensor (3) by means of physical parameters of at least a group of the plurality of sensors (3) and the numerical model.

8. Thermal energy storage system (1) according to claim 7,
wherein
the thermal energy storage system (1) is configured by a method according to any of claims 1 to 6.

9. Thermal energy storage system (1) according to claim 7 or 8,
wherein
the plurality of sensors (3) is configured as temperature sensors (3).

10. Method for operating a thermal energy storage system (1) according to any of claims 7 to 9, comprising the following steps:
- measuring physical parameters at the different locations by a plurality of sensors (3),
- processing the measured physical parameters with a numerical model by the control device (4) of the thermal energy storage system (1), and
- determining a physical parameter of a location of a first virtual sensor (3a) of the thermal energy storage system (1), based on the numerical model and the measured physical parameters.
